# EUROPÄISCHE PATENTSCHRIFT

(11) **EP 2 444 767 B1**
(45) Veröffentlichungstag und Bekanntmachung des Hinweises auf die Patenterteilung: **27.05.2015**
(21) Anmeldenummer: 12000074.0
(22) Anmeldetag: 09.01.2012
(51) Int. Cl.: F28D 7/14, F28F 1/06, B21D 11/08, B21D 53/06, F16L 9/18

(54) **Doppelrohr für einen Wärmeübertrager**
Double tube for a heat exchanger
Tube double pour un échangeur de chaleur

(43) Veröffentlichungstag der Anmeldung: 25.04.2012
(73) Patentinhaber: V-Zug AG, 6301 Zug (CH)
(72) Erfinder: Meienberg, Hilmar, 6340 Baar (CH)
(74) Vertreter: Toleti, Martin

(56) Entgegenhaltungen:
- DE-A1- 1 947 917
- DE-A1- 3 047 736
- DE-U1- 9 004 539
- JP-A- 2005 164 210

## Beschreibung

### Gebiet der Erfindung

Die Erfindung betrifft ein Verfahren zum Biegen eines Doppelrohres für einen Wärmeübertrager, sowie ein Doppelrohr für einen Wärmeübertrager.

### Hintergrund

Wärmeübertrager, auch Wärmetauscher genannt, finden in Haushaltsgeräten wie Waschmaschinen, Wäschetrocknern oder Geschirrspülern eine breite Anwendung, insbesondere auch bei Geräten einer neuen Generation mit einer Wärmepumpe, die einen noch energieeffizienteren Betrieb erlaubt. Im vorliegenden Fall enthält ein solcher Wärmeübertrager ein Doppelrohr mit einem in einem Aussenrohr angeordneten Innenrohr, bei dem beispielsweise das Innenrohr ein Prozessfluid aufnimmt, wohingegen der Zwischenraum zwischen Aussenrohr und Innenrohr der Aufnahme eines Wärme- oder Kältefluids zum Erwärmen oder Abkühlen des Prozessfluids dient.

Für eine effektive Wärmeübetragung muss ein solches Doppelrohr ausreichend lang sein, welches Doppelrohr deshalb ohne Biegung nicht in einem Haushaltsgerät verbaut werden kann. Insofern wird das Doppelrohr vor seinem Einbau in das Haushaltsgerät gebogen, beispielsweise mäanderförmig gebogen, und nimmt damit eine kompakte Einbauform an.

Da solche Doppelrohre jedoch meist aus Metall hergestellt sind, können Innen- oder Aussenrohr beim Biegen knicken. Je nach Art des Prozessfluids kann ein solches Prozessfluid aber Rückstände wie Textilflusen oder andere grobkörnige Partikel oder Festkörper aufweisen, die insbesondere an solchen Knickstellen anhaften und nicht mehr abtransportiert werden können. Eine Verstopfung des Rohres kann eine mögliche Folge sein, wodurch der Wärmeübertrager nicht mehr funktionsfähig ist.

Die JP 2005 164210 A zeigt einen Wärmetauscher mit einer kompakten Form. Der Wärmetauscher enthält ein Doppelrohr, dessen Aussenrohr beim Biegen zu einer Wendel zu einem elliptischen Querschnitt verformt wird. Die Berührungsstellen zwischen dem elliptischen Aussenrohr und dem Innenrohr werden verschweisst, sodass keine Geräusche durch Aufeinanderprallen von Innen- und Aussenrohr entstehen können.

Die DE 30 47 736 A1 offenbart einen Wärmetauscher mit einem Doppelrohr, wobei in das Aussenrohr auf dem Innenrohr aufliegende Sicken eingedrückt sind um beim Biegen des Doppelrohres die Kräfte vom Aussen- auf das Innenrohr zu übertragen.

### Darstellung der Erfindung

Insofern existiert ein Bedarf an einem gebogenen Doppelrohr für einen Wärmetauscher eingesetzt in Haushaltsgeräten, sowie an einem Verfahren zum Biegen eines Doppelrohres für einen Wärmetauscher eingesetzt in Haushaltsgeräten, bei denen ein vorzugsweise das Prozessfluid transportierendes Innenrohr auch in Biegungen des Doppelrohrs frei von Knicken ist.

Gemäss einem ersten Aspekt der Erfindung wird ein Verfahren angegeben zum Biegen eines Doppelrohres für einen Wärmeübertrager. Hierbei wird ausgehend von einem zunächst geraden Doppelrohr umfassend ein in einem Aussenrohr beabstandet zu diesem angeordnetes Innenrohr zunächst das Aussenrohr behandelt. Dabei wird das Aussenrohr an einer zukünftigen Biegestelle in Richtung des Innenrohres umgeformt. Dabei wird die gerade Ausrichtung des Doppelrohres beibehalten, das heisst, die zu diesem Zeitpunkt vorgenommene Umformung des Aussenrohres erfolgt nicht als Ausfluss einer Biegung des Doppelrohres. Anschliessend wird das derart präparierte Doppelrohr an der Biegestelle gebogen.

Das vorgängige Umformen des Aussenrohres, beispielsweise durch Pressen, Drücken oder Quetschen in Richtung des Innenrohres erzeugt zumindest eine Stelle im Aussenrohr, die geringer beabstandet ist zum Innenrohr als ein Normalabstand zwischen Aussen- und Innenrohr, welcher Normalabstand der Abstand zwischen Aussen- und Innenrohr des geraden Doppelrohres ist. Diese mindestens eine Stelle, kann für das nachfolgende Biegen des Doppelrohres als Stützstelle interpretiert werden, gegen die sich das Innenrohr beim Biegen abstützen kann, und die damit eine Verformung des Innenrohres zumindest in diese Richtung verhindert. Dadurch kann insbesondere ein Knicken des Innenrohres vermieden werden. Da das Knicken einen Vorgang repräsentiert, bei dem regelmässig eine übermässige Verbreiterung des Querschnitts und des Durchmessers des Innenrohrs in eine Richtung bei gleichzeitiger Verringerung des Querschnitts und des Durchmessers in eine dazu orthogonale Richtung erfolgt, wird durch die zumindest eine Stützstelle eine übermässige Verbreiterung des Querschnitts des Innenrohres und seines Durchmessers in diese Richtung beschränkt oder verhindert.

Die Biegestelle, an der das Aussenrohr mittels Umformung präpariert wird, kann eine punktuelle Stelle entlang der Längsausdehnung des Doppelrohres sein, von der angenommen wird, dass sie im gebogenen Doppelrohr innerhalb einer Biegung liegt, in welcher Biegung das Doppelrohr von seiner geraden Ausrichtung abweicht und gekrümmt ist. Vorzugsweise weist die Biegestelle aber zumindest eine gewisse Längsausdehnung entlang der Längsachse des geraden Doppelrohres auf, sodass die spätere Biegung möglichst in Ihrer gesamten Länge präpariert wird, wodurch sich das Innenrohr beim Biegen möglichst über den gesamten Biegebereich gegen diese Stützstelle abstützen kann. Es wird darauf hingewiesen, dass nicht etwa das Aussenrohr in seinem gesamten Umfang gegen des Innenrohr verformt werden muss. Dies würde zum einen den späteren Fluss von Fluid zwischen dem Aussenrohr und dem Innenrohr behindern. Andererseits würde bei einem solchen Vorgehen das verdrängte Material schwer beherrschbar sein. Vorzugsweise werden nur einzelne Abschnitte des Aussenrohres, auch Umfangsabschnitte genannt, verformt, wobei beispielsweise ein Umfangsabschnitt diejenige Fläche des Aussenrohres darstellt, die bestimmt ist durch eine antizipierte Länge der Biegung und durch einen Bogen (ein kreisrunder Aussenrohrquerschnitt vorausgesetzt) mit einer Bogenlänge von r*n/2 mit r als Radius des Aussenrohres. Als Krafteinleitungspunkt muss nicht stets der gesamte verformte Abschnitt dienen. Es können auch nur ein oder mehrere punktuelle Krafteinleitungspunkte vorgesehen sein, die aber eine Verformung eines wesentlich grösseren Abschnitts des Aussenrohres bewirkten. Es ist von Vorteil, das Aussenrohr von zwei gegenüberliegenden Seiten her umzuformen, da dann zu einander gegenüberliegenden Seiten des Innenrohres Stützstellen entstehen, die ein Ausweichen des Innenrohres beim Biegen zu beiden Seiten limitieren oder gänzlich verhindern.

Beim Umformen wird grundsätzlich die gerade Ausrichtung des Doppelrohres beibehalten, das heisst, das Innenrohr hat vorzugsweise nach dem Umformen des Aussenrohres eine unveränderte Gestalt und einen unveränderten Querschnitt. In einer anderen Weiterbildung mag das Innenrohr durch das Aussenrohr etwas gequetscht sein, wodurch sich der Querschnitt zwar etwas ändert, aber zumindest im Wesentlichen gleich bleibt. Das Aussenrohr mag in dem betreffenden Abschnitt verformt sein, sodass sich zwar sein Querschnitt ändert. Das Aussenrohr behält dabei aber seine an sich gerade Längsausdehnung bei.

Vorzugsweise, berührt nach dem Umformen das Aussenrohr das Innenrohr zumindest punktuell, und liegt damit zumindest punktuell an dem Innenrohr an. Hierbei wird an dieser/n Stützstelle(n) dem Innenrohr beim nachfolgenden Biegen in solche potentiellen Ausbreitungsrichtungen kein Spiel mehr gegeben. In anderen Weiterbildungen mag aber ein geringer Ausbreitungsspielraum für das Innenrohr beim Biegen tölerabel sein, sodass am Ende des Umformens das Aussenrohr nicht notwendigerweise das Innenrohr berührt.

Die Stützstellen werden durch das Verformen des Aussenrohres dort gebildet, wo insbesondere eine Ausdehnung/Ausbreitung des Innenrohrs beim Biegen erwartet werden kann. Dies wird regelmässig an Umfangsabschnitten des Innenrohres sein, die nach dem Biegen Seitenwände des Innenrohres in der Biegung darstellen, also nicht diejeni gen Abschnitte, die den Innenradius und den Aussenradius des gebogenen Innenrohres bestimmen. Demzufolge können Umfangsabschnitte des Aussenrohres vorzugsweise umgeformt werden in plane Abschnitte, und insbesondere in zwei sich gegenüberliegende Abschnitte, die nach dem Biegen quer ausgerichtet sind zu einer Biegeachse, um die herum das Doppelrohr gebogen wird.

Es wird also das Aussenrohr von zwei sich gegenüber liegenden Seiten her verformt, und zwar in beide Richtungen der Biegeachse. Die Umformung zweier solcher Umfangsabschnitte kann gleichzeitig erfolgen, wenn beispielsweise das gerade Doppelrohr zwischen zwei sich gegenüberstehenden Backen einer Presse eingespannt wird und die Presse betätigt wird.

Hinsichtlich des Biegeschritts kann das präparierte Doppelrohr vorzugsweise in einem Biegewerkzeug unter Zuhilfenahme einer gekrümmten Biegeform gebogen werden. Insbesondere kann die Biegeform an dem Umfang ihrer Krümmung eine Wulst aufweisen zum Bilden einer konkaven Einwölbung im Aussenrohr. Eine solche Wölbung mag wiederum während des Biegens als Stützstelle für das ausbreitungswillige Innenrohr dienen, oder auch im Betrieb mechanisch stabilisierend wirken.

Gemäss einem weiteren Aspekt der vorliegenden Erfindung enthält ein Doppelrohr für einen Wärmeübertrager ein Aussenrohr und ein innerhalb des Aussenrohres angeordnetes Innenrohr. In einer Geraden, die als mehr oder weniger gerader Abschnitt des Doppelrohres verstanden wird, ist das Innenrohr beabstandet von dem Aussenrohr angeordnet. In einer Biegung jedoch liegt das Aussenrohr an einer ersten Stelle an dem Innenrohr an, und an einer der ersten Stelle gegenüber liegenden weiteren Stelle. Insofern hat das Aussenrohr an diesen Stellen als Stütze gewirkt gegen ein sich aufgrund des Biegens in diese Richtung ausbreitendes Innenrohr.

In einer bevorzugten Weiterbildung weist das Innenrohr einen ersten Querschnitt auf, welcher erste Querschnitt auch nach dem Biegen des Doppelrohres im Wesentlichen beibehalten wird. Insofern ist das Innenrohr in der Biegung nicht geknickt, was einem Ansammeln von Partikeln an einer solchen Knickstelle und einem dadurch bedingten Verstopfen des Innenrohres vorbeugt. Das Aussenrohr weist in der Geraden einen zweiten Querschnitt auf, der jedoch in der Biegung einer Modifizierung unterliegt. Insbesondere ist also die Modifizierung des Querschnitts des Aussenrohrs in der Biegung dergestalt, dass das Aussenrohr an zumindest einer ersten Stelle an dem Innenrohr anliegt, und dass bevorzugt das Aussenrohr auch an einer der ersten Stelle gegenüber liegenden weiteren Stelle an dem Innenrohr anliegt. Insofern hat das Aussenrohr an diesen Stellen als Stütze gewirkt gegen ein sich aufgrund des Biegens in diese Richtung ausbreitendes Innenrohr, wodurch das Innenrohr im Wesentlichen seinen Querschnitt beibehalten kann. Im Wesentlichen in diesem Kontext bedeutet, dass der Querschnitt des Innenrohrs in der Biegung um nicht mehr als 25%, und bevorzugt nicht mehr als 10% abweicht von dem Querschnitt des Innenrohrs in der Geraden, oder anders ausgedrückt, dass der Querschnitt des Innenrohrs in der Biegung nach dem Biegen um nicht mehr als 25% und bevorzugt nicht mehr als 10% abweicht von dem Querschnitt des Innenrohrs an der Biegestelle vor dem Biegen.

Es ist darauf hingewiesen, dass im Kontext des Verfahrens und des Doppelrohres ein Rohr zunächst nur einen Hohlkörper mit einer Längsausdehnung darstellt, ohne dass der Begriff Rohr bereits mit einem vorgegebenen Querschnitt, beispielsweise einem kreisrunden Querschnitt belegt ist. Der Querschnitt des Innenrohres wie auch des Aussenrohres kann insbesondere jeweils kreisrund sein, oder aber auch oval oder rechteckig. Als Querschnitt eines Rohres wird ein Schnitt durch das Rohr quer zu seiner Längsausdehnung verstanden. Der Querschnitt eines Rohres ist also insbesondere bestimmt durch seine Geometrie und seine Ausmasse.

Vorzugsweise sind Aussenrohr und Innenrohr aus einem harten Material hergestellt, vorzugsweise aus dem gleichen Material, und vorzugsweise enthält das Material Metall, insbesondere Kupfer oder Chromstahl. In einer bevorzugten Weiterbildung ist das Doppelrohr ein Doppelrohr eines Verflüssigers in einem Wärmetauscher eines Haushaltsgeräts, bei dem das Innenrohr das Prozessfluid führt, und bei dem der Zwischenraum zwischen dem Aussenrohr und dem Innenrohr das Kühl- oder Wärmefluid führt. Fluid in diesem Kontext mag zunächst jeweils eine Flüssigkeit oder ein Gas umfassen. In obigem Kontext mag das Doppelrohr vorzugsweise in einer Wärmepumpe eines Waschautomaten zum Einsatz kommen, bei dem das Innenrohr insbesondere eine flüssige Waschlauge als Prozessfluid führt, wohingegen das Aussenrohr ein gasförmiges Kältemittel, beispielsweise Tetraflourethan R134a im Gegenstrom transportiert, das gegen Ende des Doppelrohres in Transportrichtung kondensiert. Insofern kann dieser Wärmetauscher auch als Koaxialverflüssiger, oder als Mantelrohrwärmeübertrager verstanden werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
FIG. 1 ein Doppelrohr eines Wärmeübertragers für ein Haushaltsgerät in einer perspektivischen Darstellung gemäss einem Ausführungsbeispiel der Erfindung,
FIG. 2 eine Längsschnitt durch das Doppelrohr aus Fig. 1 im Bereich A,
FIG. 3 Illustrationen eines nicht im Sinne der Erfindung behandelten Doppelrohres im Querschnitt an einer Biegestelle vor dem Biegen a), und nach dem Biegen b),
FIG. 4 eine perspektivische Ansicht eines Doppelrohres vor einem Umformungsschritt a), und nach dem Umformungsschritt b) gemäss einem Ausführungsbeispiel der Erfindung,
FIG. 5 eine perspektivische Ansicht eines umgeformten Doppelrohres vor einem Biegeschritt gemäss einem Ausführungsbeispiel der Erfindung, und

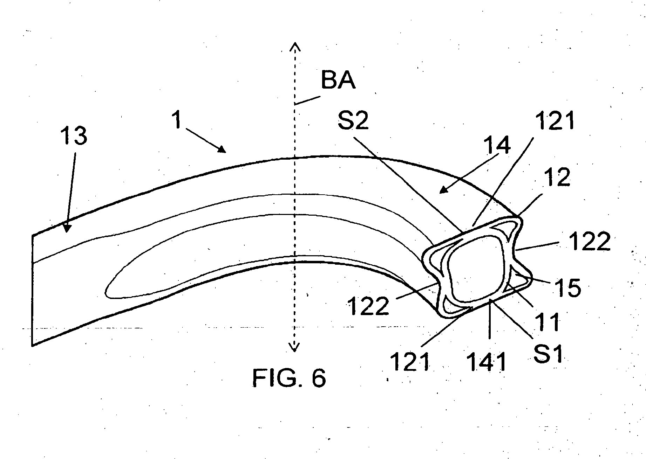

FIG. 6 eine perspektivische Ansicht eines gebogenen Doppelrohres gemäss einem Ausführungsbeispiel der Erfindung.

### Weg(e) zur Ausführung der Erfindung

Gleiche oder ähnliche Elemente sind in den Figuren figurenübergreifend mit den gleichen Bezugszeichen gekennzeichnet.

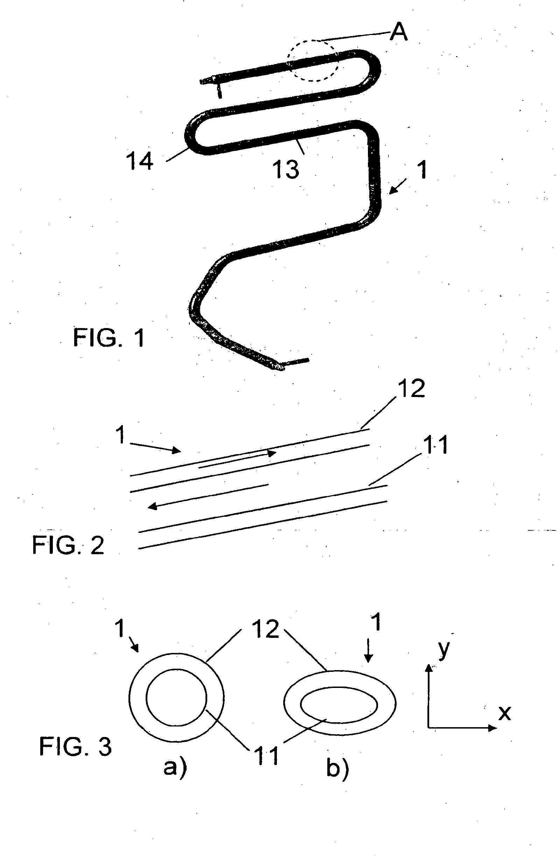

Figur 1 zeigt ein Doppelrohr 1 eines Wärmeübertragers für ein Haushaltsgerät gemäss einem Ausführungsbeispiel der Erfindung. Das Doppelrohr 1 enthält mehrere Biegungen 14 und zwischen den Biegungen 14 Geraden 13. Das vorliegende Doppelrohr 1 ist aus Kupfer und weist eine Gesamtlänge von etwa zwei Meter auf. Das Doppelrohr 1 ist bereit für den Einbau in einen Waschautomaten, wobei der Wärmeübertrager mit seinen Mäandern an der Innenseite einer Seitenwand des Waschautomaten angeordnet wird.
Figur 2 zeigt einen Längsschnitt des Doppelrohres 1 im Bereich A aus Figur 1. Dabei ist ein Aussenrohr 12 ersichtlich, das ein Innenrohr 11 im Sinne eines Mantels umschliesst. In dem Innenrohr 11 wird im vorliegenden Beispiel eine lauwarme Waschlauge aus einer Trommel eines Waschautomaten abtransportiert, die erhitzt werden soll. Der Pfeil zeigt die Transportrichtung an. In einem Zwischenraum zwischen dem Aussenrohr 12 und dem Innenrohr 11 wird in Gegenrichtung - siehe Pfeil - ein Kältemittel, in gasförmiger Form transportiert, das während des Transports über das Innenrohr 11 kondensiert und damit die Waschlauge erwärmt.
Figur 3 zeigt schematische Illustrationen eines Doppelrohres 1 im Querschnitt an einer Biegestelle vor dem Biegen a), und nach dem Biegen b), welches Doppelrohr nicht im Sinne der Erfindung behandelt wurde. Dabei zeigt Figur 3a) den Querschnitt des noch nicht gebogenen Doppelrohres, wohingegen Figur 3b) den Querschnitt des gebogenen Doppelrohres an einer Biegestelle zeigt. Es zeigt sich, dass das Innenrohr 11 und das Aussenrohr 12 in der Biegung knicken können, und damit einen vergrösserten Durchmesser entlang der x-Achse aufweisen sowie einen verringerten Querschnitt in der y-Achse, und mithin eine ellipsenähnliche Form einnehmen.

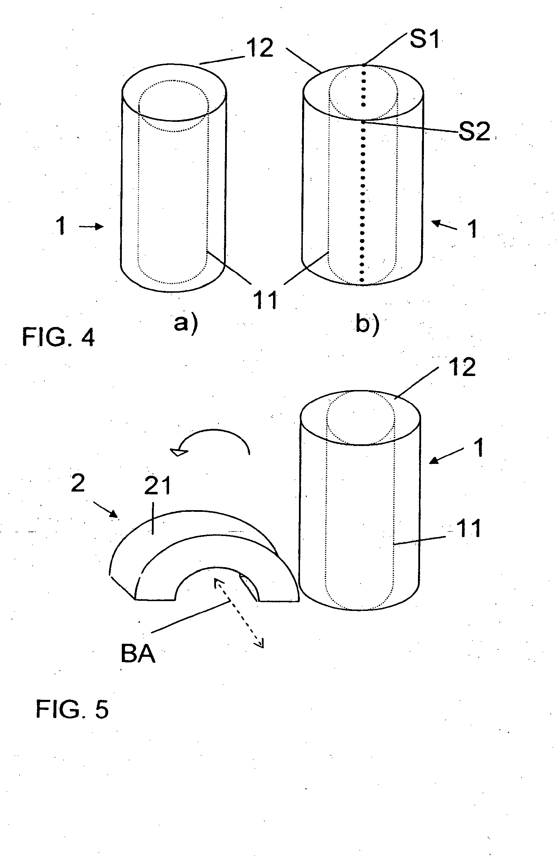

Zum Verhindern eines solchen Knickens des Innerohrs wird gemäss Figur 4 das Aussenrohr 12 in seinem geraden Zustand vor dem Biegen des Doppelrohres 1 präpariert. Figur 4a) zeigt dabei das Doppelrohr 1 in perspektivischer und teilweise transparenter Ansicht mit einem Innenrohr 11 mit einem kreisrunden Querschnitt umgeben von einem Aussenrohr 12 mit ebenfalls kreisrundem Querschnitt, wobei das Innenrohr 11 das Aussenrohr 12 nicht berührt. Im folgenden Umformungsschritt, dessen Ergebnis in Figur 4b) illustriert wird, wird nun das Aussenrohr 12 von zwei gegenüberliegenden Seiten her gegen das Innenrohr 11 gedrückt, sodass das Aussenrohr 12 das Innenrohr 11 an zwei gegenüberliegenden Stellen S1 und S2 berührt. Die Berührungsstellen S1 und S2 sind hierbei linienförmig, da das Aussenrohr 12 im gesamten antizipierten Biegebereich über die Länge des gezeigten Doppelrohres 1 in Richtung des Innenrohres 11 verformt wurde. Bevorzugt sind die Abschnitte des Aussenrohres 12, die in Richtung des Innenrohres 11 verformt, Abschnitte, die nach dem nachfolgenden Biegen des Doppelrohres 1 Seitenwände der Biegung mitbilden.

In Figur 5 ist das umgeformte Doppelrohr 1 aus Figur 4a) neben einer Biegeform 2 gezeigt. Das Dopplerohr 1 wird an der Biegeform 2 und insbesondere entlang seiner Krümmung 21 um die Biegeachse BA in Pfeilrichtung gebogen.

In einer anderen bevorzugten Weiterbildung weist die Biegeform 2 am Umfang ihrer Krümmung 21 eine sich von einem Aussenradius der Krümmung 21 erhebende Wulst auf. Diese Wulst bewirkt, dass der Abschnitt des Aussenrohres 11, der über die Biegeform 2 gebogen wird, eine konkave Einwölbung erfährt, die zusätzlich der mechanischen Stabilität des Doppelrohres 1 dient. In einer anderen Weiterbildung mag die Biegeform 2 am Umfang ihrer Krümmung 21 eine sich von dem Aussenradius der Krümmung 21 absetzende Vertiefung aufweisen.

Figur 7 zeigt eine perspektivische Ansicht eines gebogenen Doppelrohres gemäss einem Ausführungsbeispiel der Erfindung. Ausgangspunkt sind dabei ein Innenrohr 11 und ein Aussenrohr 12 mit kreisrunden Querschnitten. Das Doppelrohr weist eine Gerade 13 auf und eine sich an die Gerade 13 anschliessende Biegung 14. Das Doppelrohr ist an einer Biegestelle innerhalb der Biegung 14 aufgeschnitten und zeigt dort einen Querschnitt des Innenrohres 11, der seinem Querschnitt in der Geraden 13 im Wesentlichen entspricht, und der mithin auch seinem Querschnitt an der Biegestelle vor dem Biegen im Wesentlichen entspricht, auch wenn der ehemals kreisrunde Querschnitt leicht verformt ist infolge des Umformen des Aussenrohrs 12 und des sich anschliessenden Biegens. Vorzugsweise ist eine Distanz zwischen den Stellen S1 und S2, welche Distanz als Durchmesser des Innenrohres 11 in der Biegung 14 angesehen werden kann, maximal 125% des Durchmessers des Innenrohres 11 in der Geraden 13, also vor dem Umformen des Aussenrohres 12 und dem sich anschliessenden Biegen, in einer vorteilhaften Weiterbildung maximal 110%, und in einer weiteren Weiterbildung maximal 100%. Hätte das Innenrohr 11 nicht einen kreisrunden Querschnitt vor dem Umformen und Biegen, so sollte eine Distanz zwischen den Stellen S1 und S2 am Innenrohr 11 vor dem Umformen des Aussenrohres 12 und des sich anschliessenden Biegens als Durchmesser und damit als massgebliche Bezugsgrösse dienen. Das Aussenrohr 12 enthält an der Biegestelle 14 Umfangsabschnitte 121, die von der Vorverarbeitung des Doppelrohres 1 herrühren. An diesen Umfangsabschnitten 121 ist das Aussenrohr 12 zumindest punktuell, und im vorliegenden Beispiel auch flächig in Kontakt mit dem Innenrohr 11 und hat damit beim Biegen des Doppelrohres ein Auslenken des Innenrohres 11 in diese Richtungen - parallel zur Biegeachse BA - verhindert. Beim Biegen über eine Biegeform 2 etwa nach Figur 5 haben sich darüber hinaus Abschnitte 122 des Aussenrohres 12 verformt zu Einwölbungen, die konkave Umfangsabschnitte 122 im Aussenrohr 12 darstellen. Die die Einwölbungen enthaltenen Umfangsabschnitte 122 bestimmen zum einen den Innenradius der Biegung 14 mit und andererseits ihren Aussenradius.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zum Biegen eines Doppelrohres für einen Wärmeübertrager, bei welchem zunächst geraden Doppelrohr (1) ein Innenrohr (11) innerhalb eines Aussenrohres (12) beabstandet von diesem angeordnet ist, umfassend die folgenden Schritte:
- Umformen des Aussenrohres (12) in Richtung des Innenrohres (11) an einer zukünftigen Biegestelle des Doppelrohres (1) unter Beibehaltung der geraden Ausrichtung des Doppelrohres (1), bei dem das Aussenrohr (12) von zwei gegenüberliegenden Seiten her gegen das Innenrohr (11) gedrückt wird, wodurch zwei Abschnitte (121) im Aussenrohr (12) geformt werden, die bei gebogenem Doppelrohr (1) quer zu einer Biegeachse (BA) für das Biegen ausgerichtet sind, und
- anschliessendes Biegen des Doppelrohres (1) an der Biegestelle.

2. Verfahren nach Anspruch 1,
bei dem das Aussenrohr (12) an der zukünftigen Biegestelle in Richtung des Innenrohres (11) umgeformt wird, bis es an zumindest einer ersten Stelle (S1) an dem Innenrohr (11) anlegt.

3. Verfahren nach Anspruch 2,
bei dem das Aussenrohr (12) an der zukünftigen Biegestelle in Richtung des Innenrohres (11) umgeformt wird, bis es an zumindest einer der ersten Stelle (S1) gegenüber liegenden weiteren Stelle (S2) an dem Innenrohr (11) anliegt.

4. Verfahren nach einem der vorhergehenden Ansprüche,
bei dem das Aussenrohr (12) umgeformt wird in durch eine Biegeachse (BA) für das Biegen vorgegebene Richtungen.

5. Verfahren nach einem der vorhergehenden Ansprüche,
bei dem das Umformen des Aussenrohres (12) durch Quetschen erzielt wird.

6. Verfahren nach einem der vorhergehenden Ansprüche,
bei dem das gerade ausgerichtete Doppelrohr (1) zwischen Backen einer Presse eingespannt wird, und
bei dem mit der Presse das Aussenrohr (12) gegen das Innenrohr (11) gedrückt wird.

7. Verfahren nach einem der vorhergehenden Ansprüche,
bei dem das Doppelrohr (1) entlang einer gekrümmten Biegeform (2) gebogen wird.

8. Verfahren nach Anspruch 7,
bei dem die Biegeform (2) an dem Umfang ihrer Krümmung (21) eine Wulst (22) aufweist zum Bilden einer konkaven Wölbung im Aussenrohr (12).

9. Doppelrohr für einen Wärmeübertrager, insbesondere hergestellt nach einem Verfahren nach einem der vorhergehenden Ansprüche, umfassend:
- ein Aussenrohr (12),
- ein innerhalb des Aussenrohres (12) angeordnetes Innenrohr (11),
- eine Gerade (13), in der das Innenrohr (11) beabstandet von dem Aussenrohr (12) angeordnet ist, und
- eine Biegung (14), in der das Aussenrohr (12) an einer ersten Stelle (S1) und an einer der ersten Stelle (S1) gegenüber liegenden weiteren Stelle (S2) an dem Innenrohr (11) anliegt,
- bei dem das Aussenrohr (12) quer zur einer Biegeachse (BA) der Biegung (14) ausgerichtete Abschnitte (121) aufweist, und
- bei dem ein jeder dieser Abschnitte (121) zumindest eine Stelle (S1,S2) aufweist, an der das Aussenrohr (12) an dem Innenrohr (11) anliegt.

10. Doppelrohr nach Anspruch 9,
bei dem das Innenrohr (11) in der Geraden (13) einen ersten Querschnitt aufweist,
bei dem das Aussenrohr (12) in der Geraden (13) einen zweiten Querschnitt aufweist,
bei dem das Innenrohr (11) in der Biegung (14) im Wesentlichen den ersten Querschnitt aufweist, und
bei dem das Aussenrohr (12) in der Biegung (14) einen gegenüber dem zweiten Querschnitt veränderten Querschnitt aufweist.

11. Doppelrohr nach Anspruch 9 oder Anspruch 10,
bei dem ein Abstand zwischen der ersten Stelle (S1) und der weiteren Stelle (S2) in der Biegung (14) nicht grösser ist als 125% des Durchmessers des Innenrohres (11) in der Geraden (13).

12. Doppelrohr nach einem der vorhergehenden Ansprüche 9 bis 11,
mit einer ersten Einwölbung in dem Aussenrohr (12) hin zu dem Innenrohr (11) in einem einen Innenradius der Biegung (14) bestimmenden Abschnitt (122) des Aussenrohrs (12).

13. Doppelrohr nach Anspruch 12,
mit einer weiteren Einwölbung in dem Aussenrohr (12) hin zu dem Innenrohr (11) in einem einen Aussenradius der Biegung (14) bestimmenden Abschnitt (122) des Aussenrohrs (11).

## Claims

1. Method for bending a double pipe (1) of a heat exchanger, wherein the initially straight double pipe (1) comprises an inner pipe (11) arranged inside an outer pipe (12), wherein the inner pipe (11) and the outer pipe (12) are spaced apart from each other, comprising the following steps:
- forming of the outer pipe (12) towards the inner pipe (11) in a prospective bending point of the double pipe (1) while maintaining the straight direction of the double pipe (1), wherein the outer pipe (12) is pressed from two opposite sides against the inner pipe (11), such that two sections (121) are formed in the outer pipe (12), which, in the bent double pipe (1), are arranged transversely to a bending axis (BA) for bending, and
- subsequent bending of the double pipe (1) at the bending point.

2. Method according to claim 1,
wherein the outer pipe (12) is formed at the prospective bending point towards the inner pipe (11) until it touches the inner pipe (11) in at least a first point (S1).

3. Method according to claim 2,
wherein the outer pipe (12) is formed at the prospective bending point towards the inner pipe (11) until it touches the inner pipe (11) in at least a further point (S2) of the inner pipe (11), opposite to the first point (S1).

4. Method according to any one of the previous claims,
wherein the outer pipe (12) is formed in a direction for bending, defined by the bending axis (BA).

5. Method according to any one of the previous claims, wherein the forming of the outer pipe (12) is achieved by squeezing.

6. Method according to any one of the previous claims, wherein the straight directional double pipe (1) is fixed in between jaws of a press, and wherein the outer pipe (12) is pressed against the inner pipe (11) by the press.

7. Method according to any one of the previous claims,
wherein the double pipe (1) is bent along a curved bending form (2).

8. Method according to claim 7,
wherein the bending form (2) comprises a ridge (22) at the perimeter of its curvature (21), for building a concave bulge in the outer pipe (12).

9. Double pipe for a heat exchanger, in particular fabricated by a method according to any one of the previous claims, comprising:
- an outer pipe (12)
- an inner pipe (11), arranged inside the outer pipe (12),
- a straight portion (13), where the inner pipe (11) is arranged such that it is spaced apart from the outer pipe (12), and
- a bent portion (14), where the outer pipe (12) touches the inner pipe (11) in a first point (S1) and in a further point (S2), opposite to the first point (S1),
- wherein the outer pipe (12) comprises sections (121), which are oriented transverse to a bending axis (BA) of the bent portion (14), and
- wherein each one of the sections (121) comprises at least a point (S1, S2), where the outer pipe (12) touches the inner pipe (11).

10. Double pipe according to claim 9,
wherein the inner pipe (11) comprises a first cross section in the straight portion (13),
wherein the outer pipe (12) comprises a second cross section in the straight portion (13),
wherein the inner pipe (11) comprises essentially the first cross section in the bent portion (14), and
wherein the outer pipe (12) comprises a modified cross section compared to the second cross-section in the bent portion (14).

11. Double pipe according to claim 9 or 10,
wherein a distance between the first point (S1) and the further point (S2) of the bending (14) does not exceed 125% of the cross section of the inner pipe in the straight portion (13).

12. Double pipe according to any one of the claims 9 to 11,
comprising a first depression in the outer pipe (12) directed towards the inner pipe (11) within a section (122) of the outer pipe (12), which section (122) defines an inner radius of the bent portion (14).

13. Double pipe according to claim 12,
comprising a further depression in the outer pipe (12) directed towards the inner pipe (11) within a section (122) of the outer pipe (12), which section (122) defines an outer radius of the bent portion (14).

## Revendications

1. Procédé pour cintrer un double tuyau pour un échangeur de chaleur, le double tuyau (1) initialement droit comprenant un tuyau intérieur (11) arrangé à l'intérieur d'un tuyau extérieur (12) à une distance de ce dernier, comprenant les étapes suivantes:
- déformation du tuyau extérieur (12) dans la direction du tuyau intérieur (11) au lieu d'une position de cintrage ultérieure du double tuyau (1) en gardant l'orientation droite du double tuyau (1), le tuyau extérieur (12) étant poussé à partir de deux côtés opposés contre le tuyau intérieur (11), par cela formant deux sections (121) dans le tuyau extérieur (12), qui sont orientées, pour le cintrage, transversalement par rapport à un axe de cintrage (BA) quand le double tuyau est cintré, et
- ultérieur cintrage du double tuyau (1) à la position de cintrage.

2. Procédé selon la revendication 1, le tuyau extérieur (12) étant déformé au lieu de la position de cintrage ultérieure dans la direction du tuyau intérieur (11), jusqu'il touche le tuyau intérieur (11) dans au moins un premier point (S1).

3. Procédé selon la revendication 2, le tuyau extérieur (12) étant déformé au lieu de la position de cintrage ultérieure dans la direction du tuyau intérieur (11), jusqu'il touche le tuyau intérieur (11) dans au moins un autre point (S2) opposé au premier point (S1).

4. Procédé selon l'une des revendications précédentes, le tuyau extérieur (12) étant déformé dans des directions prédéfinies par un axe de cintrage (BA) pour le cintrage.

5. Procédé selon l'une des revendications précédentes, la déformation du tuyau extérieur (12) étant réalisée par pressage.

6. Procédé selon l'une des revendications précédentes, le double tuyau (1) qui vient d'être aligné étant serré entre des mâchoires d'une presse, et
le tuyau extérieur (12) étant pressé contre le tuyau intérieur (11) par la presse.

7. Procédé selon l'une des revendications précédentes, le double tuyau (1) étant cintré le long d'une forme de cintrage (2) courbée.

8. Procédé selon la revendication 7, la forme de cintrage (2) ayant un boudin (22) sur la circonférence de sa courbure (21), afin de former une voûte concave dans le tuyau extérieur (12).

9. Double tuyau pour un échangeur de chaleur, particulièrement fabriqué par un procédé selon une des revendications précédentes, comprenant:
- un tuyau extérieur (12),
- un tuyau intérieur (11) arrangé dans le tuyau extérieur (12),
- une partie droite (13), dans laquelle le tuyau intérieur (11) est arrangé à une distance du tuyau extérieur (12), et
- une courbure (14), dans laquelle le tuyau extérieur (12) touche le tuyau intérieur (11) dans un premier point (S1) et autre point (S2) opposé au premier point,
- le tuyau extérieur (12) ayant des sections orientées transversalement par rapport à un axe de cintrage (BA) de la courbure (14), et
- chacune des sections (121) ayant au moins une position (S1, S2) dans laquelle le tuyau extérieur (12) touche le tuyau intérieur (11).

10. Double tuyau selon la revendication 9, le tuyau intérieur (11) ayant une première section transversale dans la section droite (13),
le tuyau extérieur (12) ayant une deuxième section transversale dans la section droite (13),
le tuyau intérieur (11) ayant essentiellement la première section transversale dans la courbure (14), et
le tuyau extérieur (12) ayant une section transversale différente de la deuxième section transversale dans la courbure (14).

11. Double tuyau selon la revendication 9 ou 10, une distance entre le première point (S1) et l'autre point (S2) dans la courbure (14) n'étant pas supérieure à 125% du diamètre du tuyau intérieur (11) dans la section droite (13).

12. Double tuyau selon l'une des revendications précédentes 9 à 11, avec une première dépression dans le tuyau extérieur (12) vers le tuyau intérieur (11) dans une section (122) du tuyau extérieur, qui définit un radius intérieur de la courbure (14).

13. Double tuyau selon la revendication 12, avec une autre dépression dans le tuyau extérieur (12) vers le tuyau intérieur (11) dans une section (122) du tuyau extérieur, qui définit un radius extérieur de la courbure (14).
